# EUROPEAN PATENT APPLICATION

(11) **EP 4 364 887 A1**
(43) Date of publication of application: **08.05.2024**
(21) Application number: 21948424.3
(22) Date of filing: 01.07.2021
(51) Int. Cl.: B23Q 11/10

(54) **MACHINE TOOL, CONTROL METHOD, AND CONTROL PROGRAM**

(71) Applicant: DMG Mori Co., Ltd., Yamatokoriyama-shi, Nara 639-1160 (JP)
(72) Inventor: FUNAKOSHI Genki, Yamatokoriyama-shi, Nara 639-1160 (JP)
(74) Representative: Grünecker Patent- und Rechtsanwälte PartG mbB
(86) International application number: PCT/JP2021/024992
(87) International publication number: WO 2023/276120

(57) **Abstract**

A machine tool (100) includes an ejection part (125) that ejects a coolant, a first tank (11) that receives the coolant, a second tank (12) that stores the coolant, a pump (152) that feeds the coolant from the first tank (11) to the second tank (12), and a control unit (50). Control modes of the pump (152) include: a first control mode in which the pump (152) is driven when a first coolant amount in the first tank (11) is more than a first predetermined amount and the pump (152) is stopped when the first coolant amount is less than a second predetermined amount; and a second control mode in which the pump (152) is driven in such a manner that the first coolant amount is a constant amount. The control unit (50) controls the pump (152) in the first control mode when a second coolant amount in the second tank (12) is more than or equal to a third predetermined amount, and switches the control mode of the pump (152) from the first control mode to the second control mode when the second coolant amount is less than the third predetermined amount.

## Description

### Technical Field

The present disclosure relates to a machine tool, a control method, and a control program.

### Background Art

A machine tool ejects a coolant into a processing area while processing a workpiece. The coolant is reused after chips and the like are removed therefrom. In this regard, Japanese Patent No. 6872087 (Patent Document 1) discloses a machine tool that includes a coolant circulation mechanism.

More specifically, a coolant is stored in a storage tank, and the machine tool ejects the coolant from the storage tank into a processing area. Thus, chips generated from a workpiece during processing are discharged from the processing area. The coolant ejected into the processing area is collected in a collection tank provided in the machine tool. The collection tank is provided with a pump, and the coolant collected in the collection tank is returned to the storage tank via an intake port of the pump.

### Citation List

### Patent Document

Patent Document 1: Japanese Patent No. 6872087

### Summary of Invention

### Technical Problem

The machine tool disclosed in Patent Document 1 controls circulation of the coolant in such a manner that the amount of coolant in the collection tank is constant. In this case, foreign matter such as oil and chips are not dispersed in the collection tank and may accumulate in the collection tank. Therefore, there is demand for a technology for discharging foreign matter from the collection tank more reliably.

### Solution to Problem

In an example of the present disclosure, a machine tool includes: a cover body for defining a processing area; an ejection part for ejecting a coolant into the processing area; a first tank for receiving the coolant ejected into the processing area; a first detector for detecting a first coolant amount that is an amount of coolant in the first tank; a second tank for storing the coolant to be supplied to the ejection part; a second detector for detecting a second coolant amount that is an amount of coolant in the second tank; a pump for feeding the coolant from the first tank to the second tank; and a control unit that controls the machine tool. Control modes of the pump include: a first control mode in which the pump is driven when the first coolant amount is more than a first predetermined amount and the pump is stopped when the first coolant amount is less than a second predetermined amount that is smaller than the first predetermined amount; and a second control mode in which the pump is driven in such a manner that the first coolant amount is a constant amount. The control unit controls the pump in the first control mode when the second coolant amount is more than or equal to a third predetermined amount, and switches the control mode of the pump from the first control mode to the second control mode in response to the second coolant amount falling below the third predetermined amount.

In an example of the present disclosure, the control unit stops the machine tool when the second coolant amount is less than a fourth predetermined amount that is smaller than the third predetermined amount.

In an example of the present disclosure, an amount obtained by subtracting the fourth predetermined amount from the third predetermined amount is larger than an amount obtained by subtracting the second predetermined amount from the first predetermined amount.

In an example of the present disclosure, the machine tool further includes a light source. When the control mode of the pump is the first control mode, the control unit causes the light source to emit light in a first light emission pattern. When the control mode of the pump is the second control mode, the control unit causes the light source to emit light in a second light emission pattern that is different from the first light emission pattern.

In an example of the present disclosure, the pump includes an intake port for sucking the coolant. The intake port is covered by the coolant when the amount of coolant in the first tank is the first predetermined amount. The intake port is not covered by the coolant when the amount of coolant in the first tank is the second predetermined amount.

In an example of the present disclosure, the constant amount is smaller than the first predetermined amount and larger than the second predetermined amount. The intake port is covered by the coolant when the amount of coolant in the first tank is the constant amount.

In an example of the present disclosure, whether or not to switch the control mode of the pump from the first control mode to the second control mode is determined based on the second coolant amount detected by the second detector when the first coolant amount reaches the second predetermined amount.

In another example of the present disclosure, a method for controlling a machine tool is provided. The machine tool includes: a cover body for defining a processing area; an ejection part for ejecting a coolant into the processing area; a first tank for receiving the coolant ejected into the processing area; a first detector for detecting a first coolant amount that is an amount of coolant in the first tank; a second tank for storing the coolant to be supplied to the ejection part; a second detector for detecting a second coolant amount that is an amount of coolant in the second tank; and a pump for feeding the coolant from the first tank to the second tank. Control modes of the pump include: a first control mode in which the pump is driven when the first coolant amount is more than a first predetermined amount and the pump is stopped when the first coolant amount is less than a second predetermined amount that is smaller than the first predetermined amount; and a second control mode in which the pump is driven in such a manner that the first coolant amount is a constant amount. The control method includes: a step of controlling the pump in the first control mode when the second coolant amount is more than or equal to a third predetermined amount; and a step of switching the control mode of the pump from the first control mode to the second control mode in response to the second coolant amount falling below the third predetermined amount.

In another example of the present disclosure, a program for controlling a machine tool is provided. The machine tool includes: a cover body for defining a processing area; an ejection part for ejecting a coolant into the processing area; a first tank for receiving the coolant ejected into the processing area; a first detector for detecting a first coolant amount that is an amount of coolant in the first tank; a second tank for storing the coolant to be supplied to the ejection part; a second detector for detecting a second coolant amount that is an amount of coolant in the second tank; and a pump for feeding the coolant from the first tank to the second tank. Control modes of the pump include: a first control mode in which the pump is driven when the first coolant amount is more than a first predetermined amount and the pump is stopped when the first coolant amount is less than a second predetermined amount that is smaller than the first predetermined amount; and a second control mode in which the pump is driven in such a manner that the first coolant amount is a constant amount. The program causes the machine tool to execute: a step of controlling the pump in the first control mode when the second coolant amount is more than or equal to a third predetermined amount; and a step of switching the control mode of the pump from the first control mode to the second control mode in response to the second coolant amount falling below the third predetermined amount.

The above-described object, other objects, features, aspects, and advantages of the present invention will be clarified by the following detailed description of the present invention to be understood in connection with the attached drawings.

### Brief Description of the Drawings

FIG. 1 is a diagram showing an appearance of a machine tool.
FIG. 2 is a diagram showing a configuration example of drive mechanisms of the machine tool.
FIG. 3 is a diagram showing an appearance of a chip conveyor.
FIG. 4 is a diagram showing a cross section of the chip conveyor.
FIG. 5 is a diagram showing an example of a coolant circulation mechanism.
FIG. 6 is a diagram showing an ON/OFF control mode.
FIG. 7 is a diagram showing an analog control mode.
FIG. 8 is a diagram showing a timing at which control modes of a collection pump are switched.
FIG. 9 is a diagram showing an example of abnormality handling processing performed by the machine tool.
FIG. 10 is a diagram showing an example of light emission patterns of a light source.
FIG. 11 is a diagram showing another example of light emission patterns of the light source.
FIG. 12 is a diagram showing a collection tank 11 and a collection pump.
FIG. 13 is a diagram showing an example of a hardware configuration of a CPU (Central Processing Unit).
FIG. 14 is a diagram showing an example of a hardware configuration of a CNC (Computer Numerical Control) unit.
FIG. 15 is a flowchart showing the flow of tool information search processing.

### Description of Embodiments

The following describes an embodiment according to the present invention with reference to the drawings. In the following description, the same components and the same constitutional elements are denoted by the same reference numeral. Those components and constitutional elements have the same name and the same function. Accordingly, detailed descriptions of those components and constitutional elements are not repeated. The following embodiment and variations can be selectively combined as appropriate.

### A. Appearance of Machine Tool 100

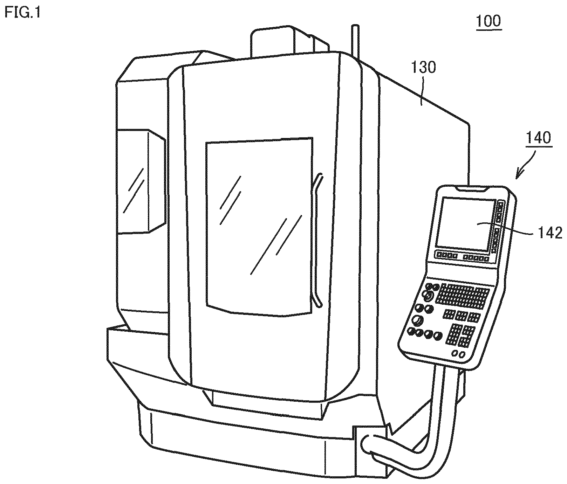

The following describes a machine tool 100 according to an embodiment with reference to FIG. 1. FIG. 1 is a diagram showing an appearance of the machine tool 100.

The "machine tool" as used in the present specification is a concept that encompasses various apparatuses having functions for processing a workpiece. In the present specification, a horizontal machining center is described as an example of the machine tool 100, but the machine tool 100 is not limited to this example. For example, the machine tool 100 may also be a vertical machining center. Alternatively, the machine tool 100 may be a lathe, an additive processing machine, or any other cutting machine or grinding machine. Furthermore, the machine tool 100 may be a combined machine obtained by combining these machines.

As shown in FIG. 1, the machine tool 100 includes a cover body 130 and a control panel 140. The cover body 130 is also called a "splash guard", forms the appearance of the machine tool 100, and defines a processing area for a workpiece W.

The control panel 140 is a general-purpose computer, and includes a display 142 for displaying various types of information related to processing. The display 142 is, for example, a liquid crystal display, an organic EL (Electro Luminescence) display, or any other display device. The display 142 includes a touch panel and accepts various operations regarding the machine tool 100 made by means of touch operations.

### B. Drive Mechanisms of Machine Tool 100

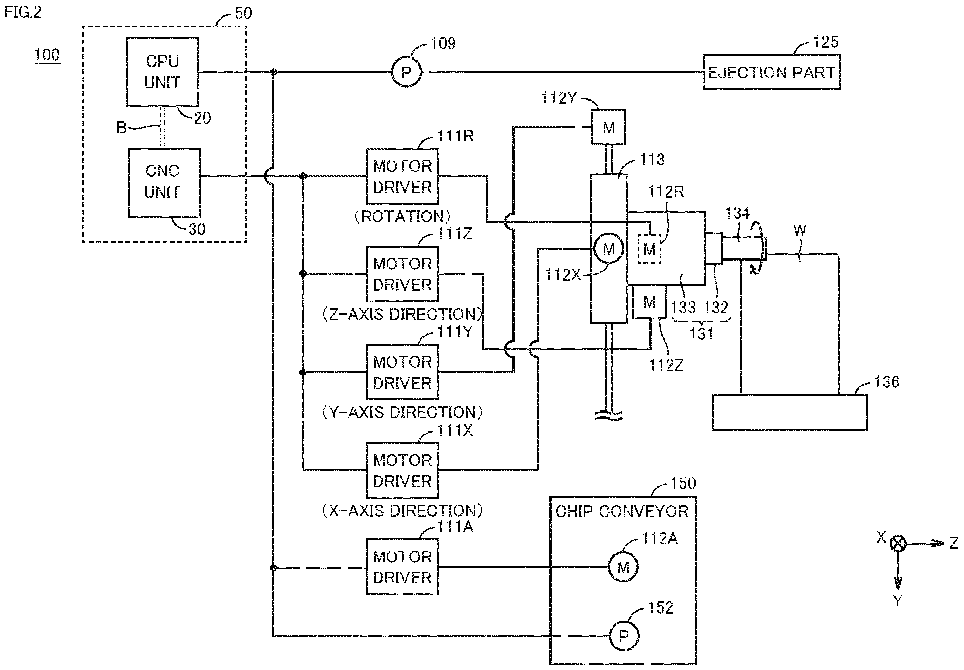

Next, the following describes various drive mechanisms of the machine tool 100 with reference to FIG. 2. FIG. 2 is a diagram showing a configuration example of drive mechanisms of the machine tool 100.

As shown in FIG. 2, the machine tool 100 includes a control unit 50, an ejection pump 109, motor drivers 111A, 111R, and 111X to 111Z, motors 112R and 112X to 112Z, a movable body 113, an ejection part 125, a spindle head 131, a table 136, and a chip conveyor 150. The chip conveyor 150 includes a motor 112A and a collection pump 152.

The ejection part 125 is provided inside the machine tool 100 and ejects a coolant to discharge chips generated through processing of the workpiece W to the chip conveyor 150.

The spindle head 131 includes a spindle 132 and a housing 133. The spindle 132 is provided in the housing 133. A tool for processing the workpiece W, which is a processing target, is attached to the spindle 132. In the example shown in FIG. 2, a tool 134 used for milling of the workpiece W is attached to the spindle 132.

Hereinafter, the axial direction of the spindle 132 will also be referred to as a "Z-axis direction", for the sake of convenience of description. The gravitational direction will also be referred to as a "Y-axis direction". A direction orthogonal to both the Y-axis direction and the Z-axis direction will be referred to as an "X-axis direction".

The chip conveyor 150 is a mechanism for discharging chips generated through processing of the workpiece W to the outside of the processing area. Details of the chip conveyor 150 will be described later.

The term "control unit 50" as used in the present specification means a device that controls the machine tool 100. There is no limitation to the device configuration of the control unit 50. The control unit 50 may be constituted by a single control unit or a plurality of control units. In the example shown in FIG. 2, the control unit 50 is constituted by a CPU 20 that is a PLC (Programmable Logic Controller) and a CNC (Computer Numerical Control) unit 30. The CPU 20 and the CNC unit 30 communicate with each other via a communication path B (e.g., a field bus or a LAN cable).

The CPU 20 controls various units included in the machine tool 100 in accordance with a PLC program designed in advance. The PLC program is written by a ladder program, for example.

In an example, the CPU 20 controls the ejection pump 109 in accordance with the PLC program to control ejection of the coolant from the ejection part 125. Thus, ejection of the coolant is switched on and off, and a coolant ejection amount is controlled, for example.

In another example, the CPU 20 controls the motor driver 111Ain accordance with the PLC program. The motor driver 111A receives input of a target rotational speed of the motor 112A from the CPU 20, and controls the motor 112A. Thus, driving of the chip conveyor 150 is switched on and off, and a chip conveying speed of the chip conveyor 150 is controlled, for example. The motor 112A may be an AC motor, a stepping motor, a servomotor, or any other type of motor.

In another example, the CPU 20 controls the collection pump 152 in accordance with the PLC program to adjust the amount of coolant in the chip conveyor 150. A method for controlling the collection pump 152 will be described later in detail.

The CNC unit 30 starts to execute a processing program designed in advance upon receiving a processing start instruction from the CPU 20. The processing program is written by a NC (Numerical Control) program, for example. The CNC unit 30 controls the motor drivers 111R and 111X to 111Z in accordance with the processing program to process the workpiece W fixed on the table 136.

The motor driver 111R successively receives input of a target rotational speed from the CNC unit 30, and controls the motor 112R. The motor 112R rotates the spindle 132 about the Z axis. The motor 112R may be an AC motor, a stepping motor, a servomotor, or any other type of motor.

In the case where the motor 112R is a servomotor, the motor driver 111R calculates an actual rotational speed of the motor 112R based on a feedback signal received from an encoder (not shown) for detecting a rotation angle of the motor 112R. When the calculated actual rotational speed is lower than the target rotational speed, the motor driver 111R increases the rotational speed of the motor 112R, and when the calculated actual rotational speed is higher than the target rotational speed, the motor driver 111R reduces the rotational speed of the motor 112R. As described above, the motor driver 111R makes the rotational speed of the motor 112R closer to the target rotational speed by successively receiving feedback about the rotational speed of the motor 112R.

The motor driver 111X successively receives input of a target position from the CNC unit 30, and controls the motor 112X. The motor 112X drives the movable body 113, to which the spindle head 131 is attached, via a ball screw (not shown) to move the spindle 132 to a desired position in the X-axis direction. The method for controlling the motor 112X by the motor driver 111X is similar to that described above about the motor driver 111R, and a redundant description thereof is omitted. The motor 112X may be an AC motor, a stepping motor, a servomotor, or any other type of motor.

The motor driver 111Y successively receives input of a target position from the CNC unit 30, and controls the motor 112Y. The motor 112Y drives the movable body 113, to which the spindle head 131 is attached, via a ball screw (not shown) to move the spindle 132 to a desired position in the Y-axis direction. The method for controlling the motor 112Y by the motor driver 111Y is similar to that described above about the motor driver 111R, and a redundant description thereof is omitted. The motor 112Y may be an AC motor, a stepping motor, a servomotor, or any other type of motor.

The motor driver 111Z successively receives input of a target position from the CNC unit 30, and controls the motor 112Z. The motor 112Z drives the movable body 113, to which the spindle head 131 is attached, via a ball screw (not shown) to move the spindle 132 to a desired position in the Z-axis direction. The method for controlling the motor 112Z by the motor driver 111Z is similar to that described above about the motor driver 111R, and a redundant description thereof is omitted. The motor 112Z may be an AC motor, a stepping motor, a servomotor, or any other type of motor.

### C. Configuration of Chip Conveyor 150

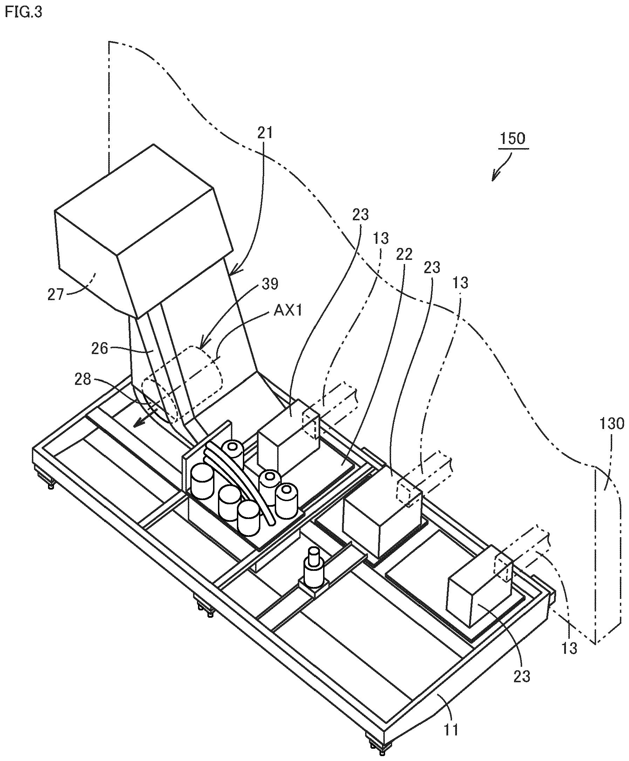

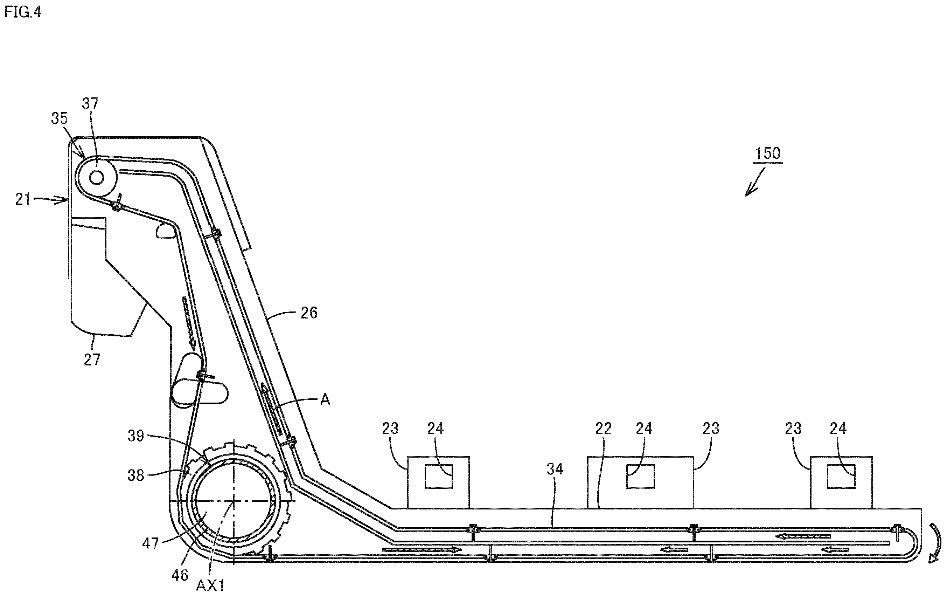

Next, the following describes the chip conveyor 150 shown in FIG. 2 described above, with reference to FIGS. 3 and 4. FIG. 3 is a diagram showing an appearance of the chip conveyor 150. FIG. 4 is a diagram showing a cross section of the chip conveyor 150.

The chip conveyor 150 is provided beside the cover body 130 defining the processing area. The chip conveyor 150 receives chips from a workpiece and the coolant discharged from the processing area.

The chip conveyor 150 includes a collection tank 11. The collection tank 11 is configured to be capable of storing the coolant therein. The chip conveyor 150 conveys chips to a chip bucket (not shown) and discharges clean coolant to the collection tank 11 by filtering the coolant.

The chip conveyor 150 also includes a cover body 21. The cover body 21 forms the appearance of the chip conveyor 150. The cover body 21 has the shape of a housing including an internal space.

The cover body 21 is composed of a horizontal section 22, chip receiving sections 23, a standing section 26, and a chip discharge part 27.

The cover body 21 as a whole is bent between the horizontal section 22 and the standing section 26. The horizontal section 22 is placed in the collection tank 11. The horizontal section 22 has the appearance of a plate extending in the horizontal direction. The horizontal section 22 has a rectangular shape in a plan view. The standing section 26 stands up from one end of the horizontal section 22 in the longitudinal direction thereof and extends diagonally upward.

The chip receiving sections 23 are provided on the horizontal section 22. The chip receiving sections 23 are constituted by boxes provided on a top surface of the horizontal section 22. Connection ports 24 are respectively provided in the chip receiving sections 23. The connection ports 24 are through holes extending through the chip receiving sections 23. Chip conveying devices 13 provided in the processing area are connected to the chip receiving sections 23 via the connection ports 24. The chip conveying devices 13 include gutter bodies extending in one direction and spiral conveyors provided in the gutter bodies, for example.

The chip discharge part 27 is provided at an end portion of the standing section 26 extending diagonally upward from the horizontal section 22. The chip discharge part 27 is an opening in the cover body 21, which is open vertically downward. A chip bucket (not shown) for collecting chips is placed under the chip discharge part 27. Chips from a workpiece discharged from the processing area are received by the cover body 21 via the chip receiving sections 23. The chips are conveyed by a chip conveying mechanism, which will be described below, in the cover body 21, discharged from the chip discharge part 27, and collected in the chip bucket.

The chip conveyor 150 further includes a chip conveying unit 35. The chip conveying unit 35 is housed in the cover body 21. The chip conveying unit 35 is a device for conveying chips in the cover body 21.

More specifically, the chip conveying unit 35 includes a pair of endless chains 34, a driving sprocket 37, and a driven sprocket 38.

The driving sprocket 37 is provided at the end portion of the standing section 26 extending diagonally upward from the horizontal section 22. The driving sprocket 37 is located above the chip discharge part 27. The driving sprocket 37 is supported in such a manner as to be rotatable about an axis extending in a direction (hereinafter this direction will also be referred to as a "width direction of the chip conveyor 150") that is orthogonal to the sheet of FIG. 4. An output shaft of the above-described motor 112A (see FIG. 4) is coupled to the driving sprocket 37. The driving sprocket 37 rotates in response to motive power being transmitted from the motor 112A.

The driven sprocket 38 is provided in the bent portion between the horizontal section 22 and the standing section 26. The driven sprocket 38 is supported in such a manner as to be rotatable about an axis (axis AX1) extending in the width direction of the collection mechanism 150.

The pair of endless chains 34 are arranged in parallel to each other with a distance therebetween in the width direction of the chip conveyor 150. The endless chains 34 are routed within the cover body 21 so as to form rings passing through the horizontal section 22 and the standing section 26. The endless chains 34 are routed within the cover body 21 in such a manner as to reciprocate between positions corresponding to the chip receiving sections 23 and a position corresponding to the chip discharge part 27.

The endless chains 34 are wound around the driving sprocket 37 and the driven sprocket 38 and guided by a plurality of guide members on their route within the cover body 21. When the driving sprocket 37 rotates in response to receiving motive power from the motor 112A, the endless chains 34 circulate in the direction of arrows A (hatched arrows) shown in FIG. 4.

The chip conveyor 150 also includes a filtration mechanism 39. The filtration mechanism 39 is configured to discharge clean coolant from the cover body 21 to the collection tank 11 by filtering the coolant received from the processing area.

More specifically, the filtration mechanism 39 includes a drum-shaped filter 46. The filter 46 is housed in the cover body 21. The filter 46 is provided in the bent portion between the horizontal section 22 and the standing section 26. The filter 46 is configured to be capable of catching foreign matter such as chips included in the coolant. The filter 46 has a cylindrical shape, for example, and has an internal space 47 therein.

The drum-shaped filter 46 is disposed in such a manner that the central axis of the filter 46 extends in the width direction of the chip conveyor 150. The filter 46 is disposed in such a manner that the central axis of the filter 46 coincides with the axis AX1, which is the rotation center of the driven sprocket 38. Both ends of the filter 46 in the direction of the axis AX1 are connected to the driven sprocket 38.

Note that the above-described filter 46 has a drum shape, but the shape of the filter 46 is not limited to a drum shape. For example, the filter 46 may also have a rectangular shape or a circular shape.

A coolant discharge part 28 is formed in the cover body 21. The coolant discharge part 28 is a through hole extending through the cover body 21. The coolant discharge part 28 is provided to bring the internal space 47 of the filter 46 into communication with an external space outside the cover body 21. The coolant received by the cover body 21 via the chip receiving sections 23 is filtered upon entering the internal space 47 of the filter 46. The filtered coolant is discharged to the collection tank 11 via the coolant discharge part 28.

### D. Coolant Circulation Mechanism

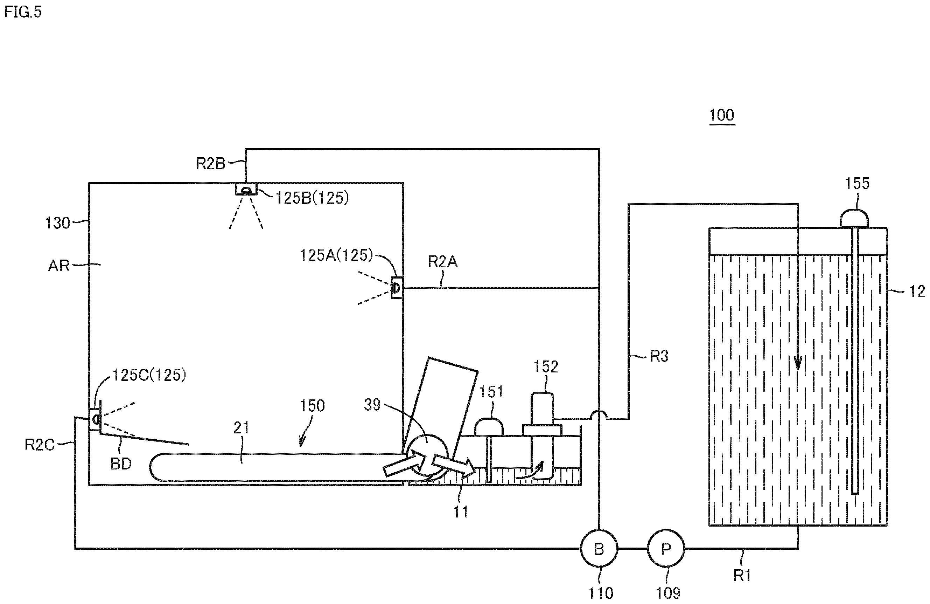

Next, the following describes a coolant circulation mechanism with reference to FIG. 5. FIG. 5 is a diagram showing an example of the coolant circulation mechanism.

The coolant ejected from the ejection part 125 circulates inside the machine tool 100. The machine tool 100 includes, as components of the coolant circulation mechanism, the collection tank 11, a storage tank 12, the ejection pump 109, a valve 110, the ejection part 125, the chip conveyor 150, a fluid volume sensor 151, the collection pump 152, a fluid volume sensor 155, and flow paths R1, R2A to R2C, and R3.

The ejection part 125 is constituted by one or more ejection mechanisms. In the example shown in FIG. 5, the ejection part 125 is constituted by ejection mechanisms 125Ato 125C.

The coolant is stored in the storage tank 12. The storage tank 12 is connected to an end of the flow path R1. The other end of the flow path R1 is connected to the valve 110. The flow path R1 branches into the flow paths R2A to R2C at the valve 110.

The flow path R2A is connected to the ejection mechanism 125A. The ejection mechanism 125A includes a coolant nozzle (not shown) that is connected to the flow path R2A, for example, and ejects the coolant pumped through the flow path R2A from the coolant nozzle toward the spindle head 131. Thus, chips from a workpiece attached to the spindle head 131 are discharged to the chip conveyor 150.

The flow path R2B is connected to the ejection mechanism 125B. The ejection mechanism 125B ejects the coolant pumped through the flow path R2B toward the entire processing area AR. Thus, chips from a workpiece in the processing area are discharged to the chip conveyor 150.

The flow path R2C is connected to the ejection mechanism 125C. The ejection mechanism 125A ejects the coolant pumped through the flow path R2A toward a wall surface of a bed BD. Thus, chips accumulated on the bed BD are discharged to the chip conveyor 150.

When the ejection pump 109 is driven, the ejection pump 109 pumps the coolant stored in the storage tank 12 from the flow path R1 to each of the flow paths R2A to R2C via the valve 110. Thus, the ejection pump 109 feeds the coolant from the storage tank 12 to the coolant nozzle of the ejection part 125.

The valve 110 is a control valve for controlling a flow rate of the coolant pumped from the storage tank 12 toward the ejection mechanisms 125A to 125C. The valve 110 is controlled by the control unit 50 described above. The valve 110 may be integrated with the ejection pump 109 or separate from the ejection pump 109.

The chip conveyor 150 includes the collection tank 11 and the filtration mechanism 39. The filtration mechanism 39 is configured to be capable of catching foreign matter such as chips included in the coolant. Coolant that has passed through the filtration mechanism 39 is discharged from the cover body 21 of the chip conveyor 150 to the collection tank 11. Thus, the collection tank 11 receives the coolant that was ejected into the processing area AR.

The fluid volume sensor 151 (a first detector) is a sensor for detecting the amount of coolant in the collection tank 11. The fluid volume sensor 151 is located downstream of the filtration mechanism 39 in the direction in which the coolant passes through the filtration mechanism 39.

Any type of sensor can be adopted as the fluid volume sensor 151 as long as it is capable of detecting a physical quantity correlating with the volume of coolant in the collection tank 11. For example, the fluid volume sensor 151 may be a float switch, a distance sensor, a weight sensor, or any other type of sensor.

In an aspect, the fluid volume sensor 151 detects a distance between the surface of coolant in the collection tank 11 and a reference plane determined in advance. The reference plane may be a bottom surface of the collection tank 11 or a horizontal plane at the installation position of the fluid volume sensor 151. In another aspect, the fluid volume sensor 151 detects the weight of the coolant in the collection tank 11.

The collection pump 152 pumps up the coolant that has passed through the filtration mechanism 39 and accumulated in the collection tank 11, and feeds the coolant to the storage tank 12 via the flow path R3. A filter (not shown) for removing foreign matter is provided in the storage tank 12. The coolant in the storage tank 12 passes through this filter and is then pumped again by the ejection pump 109 to flow through the flow path R1.

The fluid volume sensor 155 (a second detector) is a sensor for detecting the amount of coolant in the storage tank 12. Any type of sensor can be adopted as the fluid volume sensor 155 as long as it is capable of detecting a physical quantity correlating with the volume of coolant in the storage tank 12. For example, the fluid volume sensor 155 may be a float switch, a distance sensor, a weight sensor, or any other type of sensor.

In an aspect, the fluid volume sensor 155 detects a distance between the surface of coolant in the storage tank 12 and a reference plane determined in advance. The reference plane may be a bottom surface of the storage tank 12 or a horizontal plane at the installation position of the fluid volume sensor 155. In another aspect, the fluid volume sensor 155 detects the weight of coolant in the storage tank 12.

### E. Control Mode of Collection Pump 152

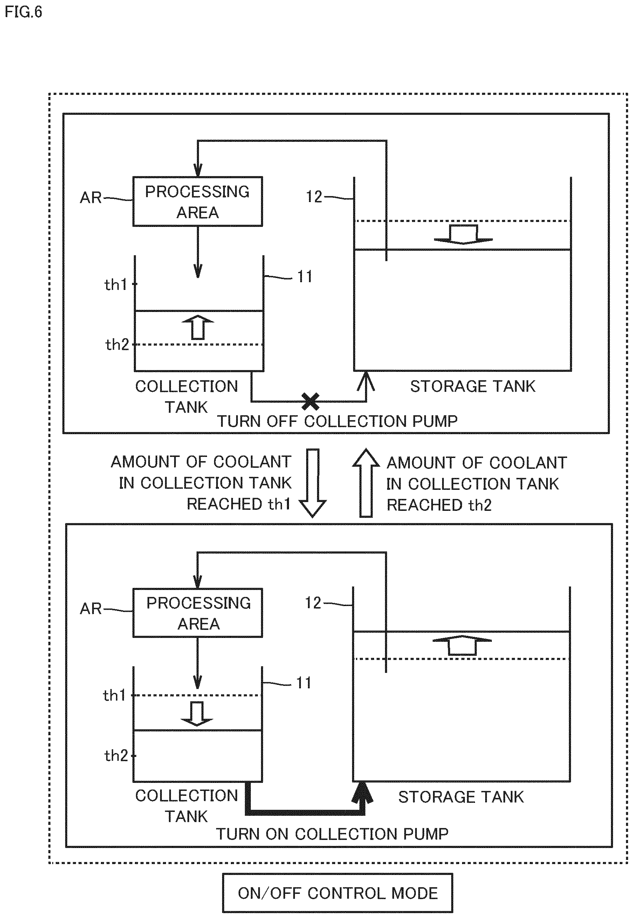

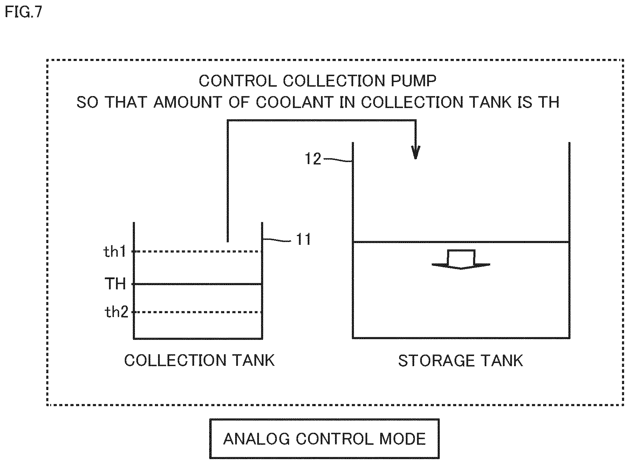

Next, the following describes control modes of the collection pump 152 shown in FIG. 5 with reference to FIGS. 6 and 7.

The control unit 50 of the machine tool 100 controls the collection pump 152 in at least two control modes. In the following, a first control mode of the collection pump 152 will be referred to as an "ON/OFF control mode" and a second control mode of the collection pump 152 will be referred to as an "analog control mode".

### E1. ON/OFF control mode

First, the following describes the ON/OFF control mode with reference to FIG. 6. FIG. 6 is a diagram showing the ON/OFF control mode. In the ON/OFF control mode, the control unit 50 increases and reduces the amount of coolant in the collection tank 11.

More specifically, first, the control unit 50 turns off the collection pump 152. This stops the discharge of coolant from the collection tank 11 to the storage tank 12. On the other hand, the coolant stored in the storage tank 12 is ejected into the processing area AR in the machine tool 100 during processing of a workpiece. The ejected coolant flows into the collection tank 11. As a result, the amount of coolant in the collection tank 11 increases and the amount of coolant in the storage tank 12 decreases. At this time, the control unit 50 periodically obtains the amount of coolant in the collection tank 11 from the fluid volume sensor 151 described above, and determines whether or not the amount of coolant is more than a predetermined amount th1. The predetermined amount th1 may be set in advance or may be set as necessary by a user.

When it is determined that the amount of coolant in the collection tank 11 is more than the predetermined amount th1, the control unit 50 drives the collection pump 152. At this time, the control unit 50 controls the collection pump 152 in such a manner that the amount of coolant discharged from the collection tank 11 to the storage tank 12 is greater than the amount of coolant ejected from the storage tank 12 to the processing area AR. For example, the control unit 50 drives the collection pump 152 at the maximum settable rotational speed (for example, 50 Hz to 60 Hz). Accordingly, the amount of coolant in the collection tank 11 decreases and the amount of coolant in the storage tank 12 increases.

Next, the control unit 50 determines whether or not the amount of coolant in the collection tank 11 is less than a predetermined amount th2 based on a value output from the fluid volume sensor 151 described above. The predetermined amount th2 is smaller than the predetermined amount th1. The predetermined amount th2 may be set in advance or may be set as necessary by the user. When it is determined that the amount of coolant in the collection tank 11 is less than the predetermined amount th2, the control unit 50 stops driving the collection pump 152.

As described above, in the ON/OFF control mode, the control unit 50 repeatedly increases and reduces the amount of coolant in the collection tank 11 between the predetermined amounts th1 and th2. This causes the height of the surface of the coolant in the collection tank 11 to fluctuate, and foreign matter (e.g., oil and floating chips) on the surface of the coolant in the collection tank 11 is discharged to the collection tank 11 via an intake port of the collection pump 152. Also, the coolant in the collection tank 11 is dispersed as the amount of coolant in the collection tank 11 increases or decreases. Therefore, foreign matter on the surface of the coolant in the collection tank 11 is more likely to be discharged to the collection tank 11.

On the other hand, the coolant evaporates due to heat generated during processing of a workpiece, for example. For example, approximately 200 L of the coolant evaporates per day. As a result, the total amount of coolant in the machine tool 100 decreases over time. Therefore, when the amount of coolant in the collection tank 11 is repeatedly increased and reduced, the control unit 50 may recognize that the coolant stored in the storage tank 12 has run out even though there is still coolant in the collection tank 11. In this case, the coolant remaining in the collection tank 11 is not used sufficiently in the machine tool.

### E2. Analog Control Mode

Next, the following describes the analog control mode with reference to FIG. 7. FIG. 7 is a diagram showing the analog control mode. In the analog control mode, the control unit 50 controls the collection pump 152 in such a manner that there is a constant amount TH of coolant in the collection tank 11.

The constant amount TH is smaller than the predetermined amount th1 described above and larger than the predetermined amount th2 described above. The constant amount TH may be set in advance or may be set as necessary by the user.

More specifically, the control unit 50 periodically obtains the amount of coolant in the collection tank 11 from the fluid volume sensor 151 described above. When the amount of coolant in the collection tank 11 is more than the constant amount TH, the control unit 50 increases the rotational speed of the collection pump 152 to a speed higher than the current rotational speed. Accordingly, the amount of coolant in the collection tank 11 decreases. On the other hand, when the amount of coolant in the collection tank 11 is less than the constant amount TH, the control unit 50 reduces the rotational speed of the collection pump 152 to a speed lower than the current rotational speed. Accordingly, the amount of coolant in the collection tank 11 increases. Thus, the amount of coolant in the collection pump 152 is kept at the constant amount TH.

As described above, in the analog control mode, the amount of coolant in the collection tank 11 neither increases nor decreases, and accordingly, a decrease in the amount of coolant in the storage tank 12 is only due to evaporation of the coolant. Therefore, a situation is avoided in which the machine tool 100 recognizes that there is no coolant remaining in the storage tank 12 even though there is still coolant in the collection tank 11, and thus the coolant in the collection tank 11 can be fully utilized in the machine tool.

However, the height of the surface of coolant in the collection tank 11 is always constant in the analog control mode. Therefore, foreign matter on the surface of the coolant, such as oil and chips, are not discharged via the intake port of the collection pump 152 to the collection tank 11.

### F. Method for Controlling Collection Pump 152

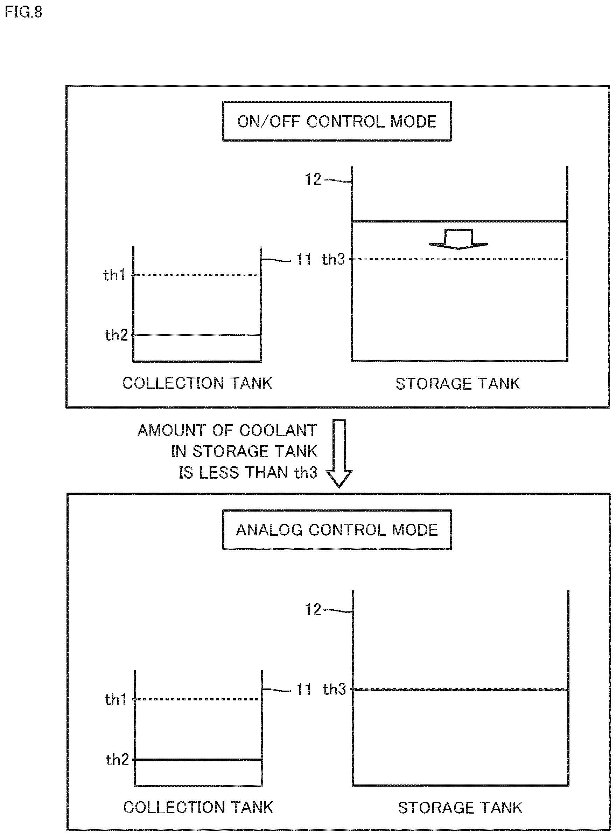

Next, the following describes a method for controlling the collection pump 152 with reference to FIG. 8. FIG. 8 is a diagram showing a timing at which the control modes of the collection pump 152 are switched.

The control unit 50 of the machine tool 100 switches the control mode of the collection pump 152 from the ON/OFF control mode to the analog control mode based on the amount of coolant in the storage tank 12.

More specifically, the control unit 50 periodically obtains the amount of coolant in the storage tank 12 from the fluid volume sensor 155 described above, and determines whether or not the amount of coolant is less than a predetermined amount th3. The predetermined amount th3 may be set in advance or may be set as necessary by the user.

When the amount of coolant in the storage tank 12 is more than or equal to the predetermined amount th3, the control unit 50 controls the collection pump 152 in the ON/OFF control mode. Thereafter, the control unit 50 switches the control mode of the collection pump 152 from the ON/OFF control mode to the analog control mode in response to the amount of coolant in the storage tank 12 falling below the predetermined amount th3. With this configuration, it is possible to obtain both the benefits of the ON/OFF control mode and the benefits of the analog control mode.

More specifically, the control unit 50 controls the collection pump 152 in the ON/OFF control mode when the amount of coolant in the storage tank 12 is large. This causes the height of the surface of coolant in the collection tank 11 to fluctuate between those of the cases where the amount of coolant is the predetermined amounts th1 and th2, and foreign matter (e.g., oil and floating chips) on the surface of the coolant in the collection tank 11 is discharged to the collection tank 11 via the intake port of the collection pump 152. Also, the coolant in the collection tank 11 is dispersed as the amount of coolant in the collection tank 11 increases or decreases. Therefore, foreign matter on the surface of the coolant in the collection tank 11 is more likely to be discharged to the collection tank 11.

On the other hand, the control unit 50 controls the collection pump 152 in the analog control mode when the amount of coolant in the storage tank 12 is small. In the analog control mode, the amount of coolant in the collection tank 11 neither increases nor decreases, and accordingly, a decrease in the amount of coolant in the storage tank 12 is only due to evaporation of the coolant. Therefore, a situation is avoided in which the machine tool 100 recognizes that there is no coolant remaining in the storage tank 12 even though there is still coolant in the collection tank 11, and thus the coolant in the collection tank 11 can be fully utilized in the machine tool.

Note that whether or not to switch the control mode of the collection pump 152 from the ON/OFF control mode to the analog control mode can be determined at a suitable timing. For example, whether or not to switch the control mode of the collection pump 152 from the ON/OFF control mode to the analog control mode is determined based on the amount of coolant in the storage tank 12 at a time when the amount of coolant in the collection tank 11 reaches the predetermined amount th2.

More specifically, the control unit 50 periodically obtains the amount of coolant in the collection tank 11 from the fluid volume sensor 151 described above while the collection pump 152 is turned on in the ON/OFF control mode. When the obtained amount of coolant reaches the predetermined amount th2, the control unit 50 obtains the amount of coolant in the storage tank 12 from the fluid volume sensor 155 described above. If the obtained amount of coolant is less than the predetermined amount th3, the control unit 50 switches the control mode of the collection pump 152 from the ON/OFF control mode to the analog control mode.

In this case, whether or not to switch the control mode of the collection pump 152 can be determined by the control unit 50 at a timing at which the amount of coolant in the collection tank 11 is the minimum. That is, the control unit 50 can determine whether or not to switch the control mode of the collection pump 152 based on a value that is close to the total amount of coolant in the machine tool 100.

### G. Abnormality Handling Processing

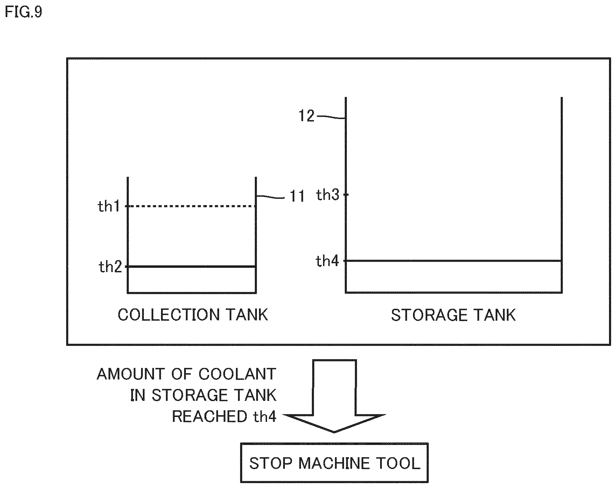

Next, the following describes abnormality handling processing performed by the machine tool 100 with reference to FIG. 9. FIG. 9 is a diagram showing an example of the abnormality handling processing performed by the machine tool 100.

As described above, the control unit 50 switches the control mode of the collection pump 152 from the ON/OFF control mode to the analog control mode at a timing at which the amount of coolant in the collection tank 11 falls below the predetermined amount th3. Thereafter, the control unit 50 periodically obtains the amount of coolant in the storage tank 12 from the fluid volume sensor 155 described above. The control unit 50 determines whether or not the amount of coolant in the storage tank 12 has reached a predetermined amount th4.

When it is determined that the amount of coolant in the storage tank 12 is more than or equal to the predetermined amount th4, the control unit 50 determines that there is enough coolant remaining in the machine tool 100. On the other hand, when the amount of coolant in the storage tank 12 is less than the predetermined amount th4, the control unit 50 determines that there is not enough coolant remaining in the machine tool 100. In this case, the control unit 50 executes the abnormality handling processing determined in advance.

For example, the abnormality handling processing includes processing for stopping the machine tool 100. This enables the machine tool 100 to reliably prevent a situation in which the coolant is not supplied during processing.

In another example, the abnormality handling processing includes notification processing for giving a notification indicating that there is not enough coolant remaining in the machine tool 100. The notification processing may be realized by displaying a message on the display 142 described above or by causing a light source 158 provided on the storage tank 12, which will be described later, to emit light. This enables the user to recognize that there is not enough coolant remaining in the machine tool 100.

As described above, the predetermined amount th4 is a reference value used to determine whether or not to execute the abnormality handling processing. The predetermined amount th4 is smaller than the predetermined amount th3. The predetermined amount th4 may be set in advance or may be set as necessary by the user.

Also, an amount obtained by subtracting the predetermined amount th4 from the predetermined amount th3 is larger than an amount obtained by subtracting the predetermined amount th2 from the predetermined amount th1. This prevents a situation in which the amount of coolant in the storage tank 12 falls below th4 while the amount of coolant in the collection tank 11 is repeatedly increased and reduced between the predetermined amounts th1 and th2 in the ON/OFF control mode by the control unit 50. That is, the abnormality handling processing is not executed before the control mode of the collection pump 152 is switched from the ON/OFF control mode to the analog control mode.

### H. Light Emission Pattern

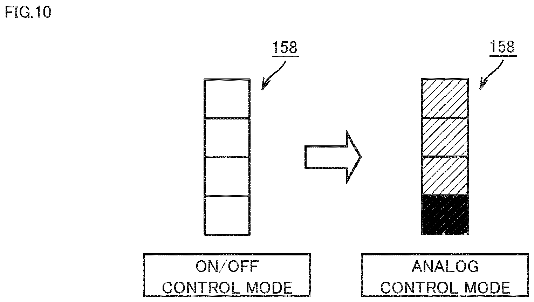

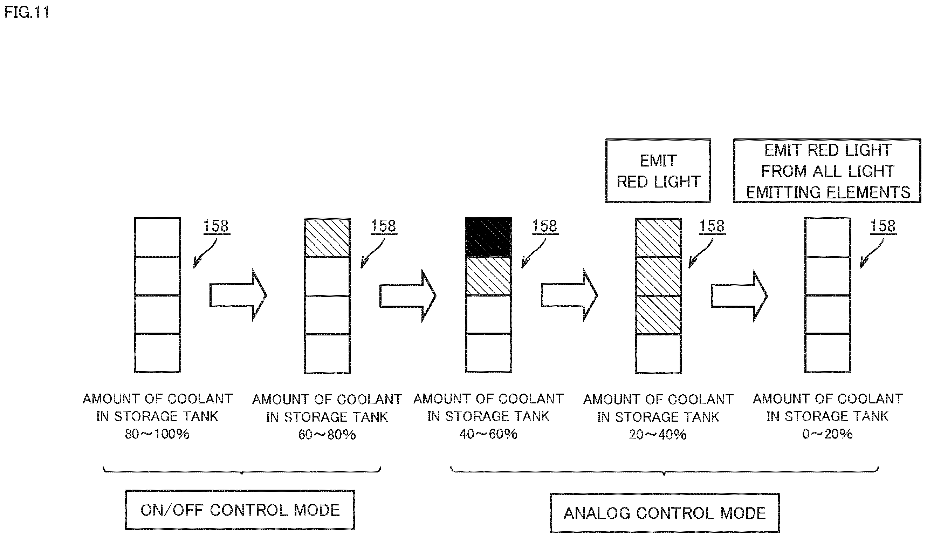

Next, the following describes light emission patterns corresponding to the control modes of the collection pump 152 with reference to FIGS. 10 and 11. FIG. 10 is a diagram showing an example of light emission patterns of the light source 158.

The light source 158 is installed in the machine tool 100 in such a manner as to be visible to the user. For example, the light source 158 is installed on a cover that forms the appearance of the storage tank 12.

The light source 158 is composed of multiple light emitting elements, for example. In the example shown in FIG. 10, the light source 158 is composed of four light emitting elements. Light emission from each light emitting element is controlled by the control unit 50 described above. Typically, light emission from each light emitting element is controlled by the CPU 20 described above.

The control unit 50 changes the light emission pattern of the light source 158 according to the control mode of the collection pump 152. More specifically, when the control mode of the collection pump 152 is the ON/OFF control mode described above, the control unit 50 causes the light source 158 to emit light in a first light emission pattern. On the other hand, when the control mode of the collection pump 152 is the analog control mode described above, the control unit 50 causes the light source 158 to emit light in a second light emission pattern that is different from the first light emission pattern. This enables the user to easily recognize the current control mode.

Note that the first and second light emission patterns may be distinguished by changing combinations of light emitting elements that are turned on or off, or by changing the color of emitted light.

Also, light emission patterns of the light source 158 are not limited to those shown in FIG. 10. FIG. 11 is a diagram showing another example of light emission patterns of the light source 158.

In the example shown in FIG. 11, the control unit 50 changes the light emission pattern of the light source 158 according not only to the control mode of the collection pump 152, but also to the amount of coolant in the storage tank 12.

For example, when the control mode of the collection pump 152 is the ON/OFF control mode and the amount of coolant in the storage tank 12 is 80% or more and 100% or less, the control unit 50 causes all of the light emitting elements of the light source 158 to emit white light.

When the control mode of the collection pump 152 is the ON/OFF control mode and the amount of coolant in the storage tank 12 is 60% or more and less than 80%, the control unit 50 turns off the light emitting element at the top of the light source 158 and causes the lower three light emitting elements of the light source 158 to emit white light.

When the control mode of the collection pump 152 is the analog control mode and the amount of coolant in the storage tank 12 is 40% or more and less than 60%, the control unit 50 turns off the upper two light emitting elements of the light source 158 and causes the lower two light emitting elements of the light source 158 to emit white light.

When the control mode of the collection pump 152 is the analog control mode and the amount of coolant in the storage tank 12 is 20% or more and less than 40%, the control unit 50 causes the light emitting element at the bottom of the light source 158 to emit red light and turns off the upper three light emitting elements of the light source 158.

When the control mode of the collection pump 152 is the analog control mode and the amount of coolant in the storage tank 12 is 0% or more and less than 20%, the control unit 50 causes all of the light emitting elements of the light source 158 to emit red light. At this time, the control unit 50 may cause the light source 158 to blink.

### I. Installation Position of Collection Pump 152

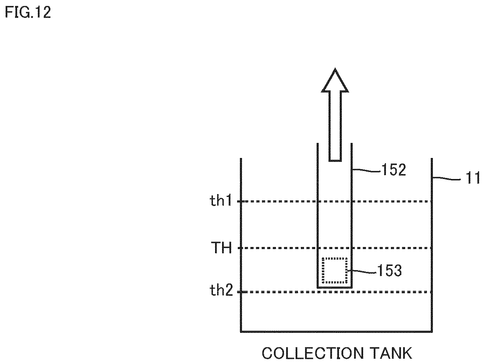

Next, a relationship between the predetermined amounts th1 and th2 described above and the installation position of the collection pump 152 will be described with reference to FIG. 12. FIG. 12 is a diagram showing the collection tank 11 and the collection pump 152.

As shown in FIG. 12, the collection pump 152 includes the intake port 153 for sucking coolant. The coolant in the collection tank 11 is sucked from the intake port 153 and discharged to the storage tank 12 described above.

As described above, in the ON/OFF control mode, the control unit 50 controls the collection pump 152 in such a manner that the amount of coolant in the collection tank 11 repeatedly increases and decreases between the predetermined amounts th1 and th2. The predetermined amounts th1 and th2 are determined based on the position of the collection pump 152.

More specifically, the intake port 153 is covered by the coolant when the amount of coolant in the collection tank 11 is the predetermined amount th1. On the other hand, the intake port 153 is not covered by the coolant when the amount of coolant in the collection tank 11 is the predetermined amount th2. In other words, the position of the intake port 153 is lower than the surface of the coolant when the amount of coolant is the predetermined amount th1 and higher than the surface of the coolant when the amount of coolant is the predetermined amount th2. Accordingly, when the amount of coolant increases or decreases, the surface of the coolant in the collection tank 11 moves up or down past the intake port 153. At this time, foreign matter on the surface of the coolant in the collection tank 11 is discharged to the storage tank 12 via the intake port 153.

Note that the position of the intake port 153 of the collection pump 152 may be adjusted based on the predetermined amounts th1 and th2, or the predetermined amounts th1 and th2 may be set based on the position of the intake port 153 of the collection pump 152.

In the above-described example, the position of the intake port 153 is determined based on the predetermined amounts th1 and th2, but the position of the intake port 153 does not necessarily need to be determined based on the predetermined amounts th1 and th2. For example, the position of the intake port 153 may be higher than the surface of the coolant when the amount of coolant is the predetermined amount th1. Alternatively, the position of the intake port 153 may be lower than the surface of the coolant when the amount of coolant is the predetermined amount th2. The coolant in the collection tank 11 is dispersed in the ON/OFF control mode in these cases as well. Therefore, foreign matter in the collection tank 11 is sucked from the intake port 153 and discharged to the storage tank 12 described above.

Preferably, the position of the intake port 153 of the collection pump 152 is adjusted based not only on the predetermined amounts th1 and th2, but also on the constant amount TH described above. More specifically, the intake port 153 is covered by the coolant when the amount of coolant in the collection tank 11 is the constant amount TH. In other words, the position of the intake port 153 is lower than the surface of the coolant when the amount of coolant is the constant amount TH. This enables the control unit 50 to keep the amount of coolant in the collection tank 11 at the constant amount TH in the analog control mode by sucking the coolant from the intake port 153.

### J. Hardware Configuration of CPU 20

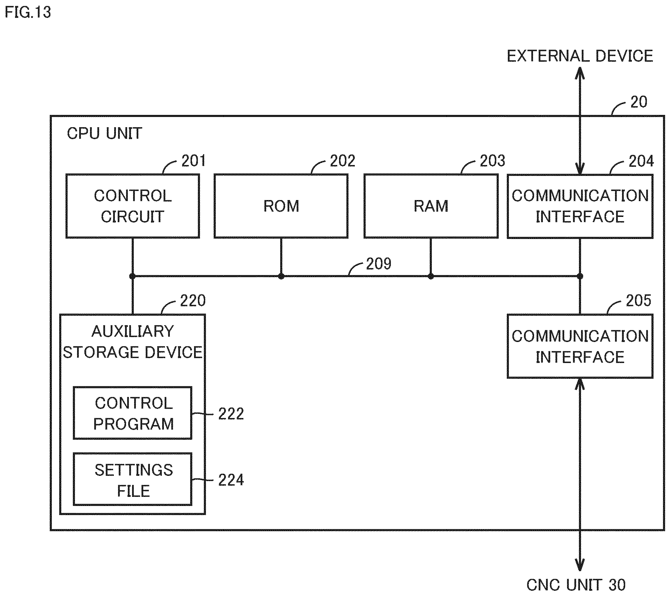

Next, the following describes a hardware configuration of the CPU 20 shown in FIG. 2 with reference to FIG. 13. FIG. 13 is a diagram showing an example of the hardware configuration of the CPU 20.

The CPU 20 includes a control circuit 201, a ROM (Read Only Memory) 202, a RAM (Random Access Memory) 203, communication interfaces 204 and 205, and an auxiliary storage device 220. These components are connected to an internal bus 209.

The control circuit 201 is constituted by at least one integrated circuit, for example. The integrated circuit may be constituted by at least one CPU, at least one GPU (Graphics Processing Unit), at least one ASIC (Application Specific Integrated Circuit), at least one FPGA (Field Programmable Gate Array), or a combination of any of these.

The control circuit 201 controls operations of the CPU 20 by executing various programs such as a control program 222. The control program 222 defines instructions for controlling various devices included in the machine tool 100. The control circuit 201 reads out the control program 222 from the auxiliary storage device 220 or the ROM 202 into the RAM 203 upon receiving an instruction for executing the control program 222. The RAM 203 functions as a working memory in which various types of data necessary for executing the control program 222 are temporarily stored.

The communication interface 204 is an interface for realizing communication performed with use of a LAN (Local Area Network) cable, a WLAN (Wireless LAN), Bluetooth (registered trademark), or the like. For example, the CPU 20 communicates with external devices such as the ejection pump 109, the motor driver 111A, and the collection pump 152 described above via the communication interface 305.

The communication interface 205 is an interface for realizing communication with various units connected to a field bus. Examples of the units connected to the field bus include the CNC unit 30 and an I/O unit (not shown).

The auxiliary storage device 220 is a storage medium such as a hard disk or a flash memory. Various types of information such as the control program 222 and a settings file 224 are stored in the auxiliary storage device 220. Various parameters that are referenced when the control program 222 is executed are defined in the settings file 224. For example, the settings file 224 includes the predetermined amounts th1 to th4 and the constant amount TH described above, and other setting values or the like.

There is no limitation to the configuration in which the control program 222 and the settings file 224 are stored in the auxiliary storage device 220, and the control program 222 and the settings file 224 may also be stored in a storage region (e.g., a cash memory) of the control circuit 201, the ROM 202, the RAM 203, an external device (e.g., a server), or the like.

Note that the control program 222 may be provided by being incorporated into another program, rather than being provided as a single program. In this case, various types of processing according to the present embodiment are realized through cooperation between the control program and the other program. Even such a program that does not include some modules does not deviate from the gist of the control program 222 according to the present embodiment. Also, some or all functions provided by the control program 222 may be realized by dedicated hardware. Also, the CPU 20 may be configured in such a manner that a part of the processing performed by the control program 222 is executed by at least one server, as is the case with a so-called cloud service.

### K. Hardware Configuration of CNC Unit 30

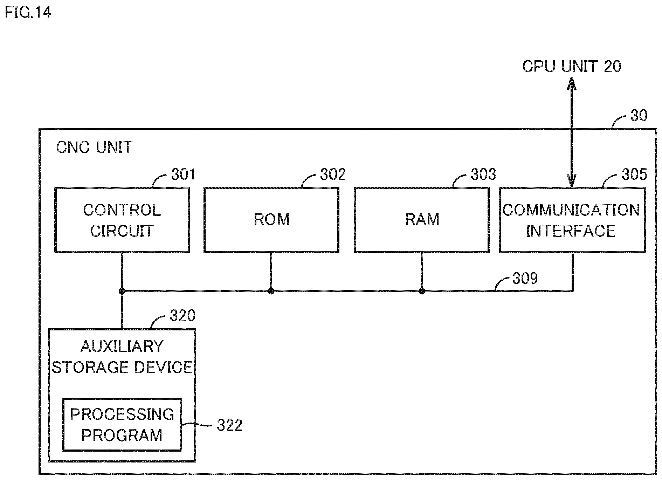

Next, the following describes a hardware configuration of the CNC unit 30 shown in FIG. 2 with reference to FIG. 14. FIG. 14 is a diagram showing an example of the hardware configuration of the CNC unit 30.

The CNC unit 30 includes a control circuit 301, a ROM 302, a RAM 303, a communication interface 305, a communication interface 305, and an auxiliary storage device 320. These components are connected to an internal bus 309.

The control circuit 301 is constituted by at least one integrated circuit, for example. The integrated circuit may be constituted by at least one CPU, at least one ASIC, at least one FPGA, or a combination of any of these, for example.

The control circuit 301 controls operations of the CNC unit 30 by executing various programs such as a processing program 322. The processing program 322 is a program for realizing processing of a workpiece. The control circuit 301 reads out the processing program 322 from the ROM 302 into the RAM 303 upon receiving an instruction for executing the processing program 322. The RAM 303 functions as a working memory in which various types of data necessary for executing the processing program 322 are temporarily stored.

The communication interface 305 is an interface for realizing communication performed with use of a LAN, a WLAN, Bluetooth (registered trademark), or the like. For example, the CNC unit 30 communicates with the CPU 20 via the communication interface 305. Also, the CNC unit 30 communicates with various driving units (e.g., the motor drivers 111R and 111X to 111Z) for processing a workpiece via the communication interface 305 or another communication interface.

The auxiliary storage device 320 is a storage medium such as a hard disk or a flash memory. The processing program 322 and the like are stored in the auxiliary storage device 320. There is no limitation to the configuration in which the processing program 322 is stored in the auxiliary storage device 320, and the processing program 322 may also be stored in a storage region (e.g., a cash memory) of the control circuit 301, the ROM 302, the RAM 303, an external device (e.g., a server), or the like.

### L. Flowchart

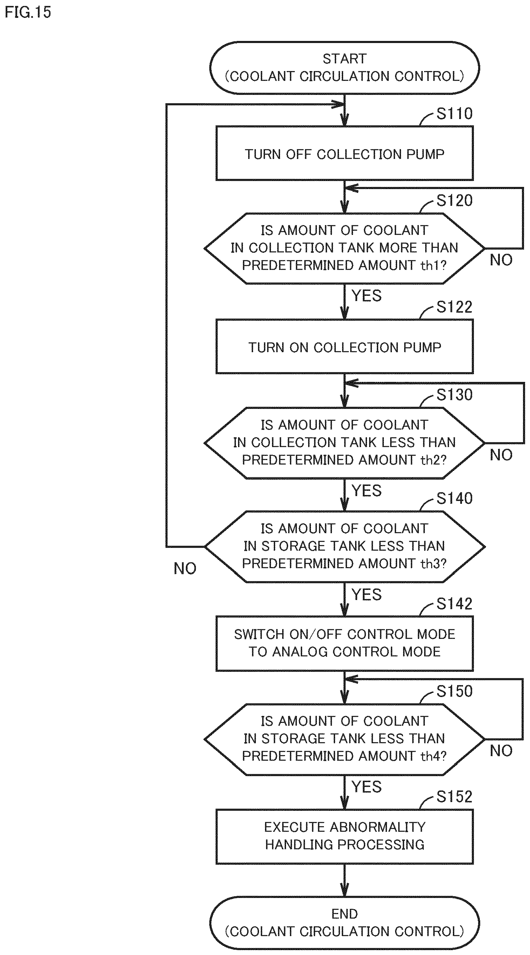

Next, the following describes a tool information search flow with reference to FIG. 15. FIG. 15 is a flowchart showing the flow of tool information search processing.

The processing shown in FIG. 15 is realized as a result of the control unit 50 executing the control program 222 described above. Note that a part or all of the processing shown in FIG. 15 may be executed by a circuit element or another piece of hardware.

In step S110, the control unit 50 turns off the collection pump 152 described above. That is, the control unit 50 sets the rotational speed of the collection pump 152 to zero. This stops the discharge of coolant from the collection tank 11 to the storage tank 12. As a result, the amount of coolant in the collection tank 11 increases and the amount of coolant in the storage tank 12 decreases.

In step S120, the control unit 50 determines whether or not the amount of coolant in the collection tank 11 is more than the predetermined amount th1 described above based on a value output from the fluid volume sensor 151 described above. Upon determining that the amount of coolant in the collection tank 11 is more than the predetermined amount th1 (YES in step S120), the control unit 50 switches control to step S122. Otherwise (NO in step S120), the control unit 50 again executes the processing in step S120.

In step S122, the control unit 50 turns on the collection pump 152 described above. At this time, the control unit 50 drives the collection pump 152 at the maximum settable rotational speed (for example, 50 Hz to 60 Hz). Accordingly, the coolant is discharged from the collection tank 11 to the storage tank 12. As a result, the amount of coolant in the collection tank 11 decreases and the amount of coolant in the storage tank 12 increases.

In step S130, the control unit 50 determines whether or not the amount of coolant in the collection tank 11 is less than the predetermined amount th2 described above based on a value output from the fluid volume sensor 151 described above. Upon determining that the amount of coolant in the collection tank 11 is less than the predetermined amount th2 (YES in step S130), the control unit 50 switches control to step S140. Otherwise (NO in step S130), the control unit 50 executes the processing in step S130 again.

In step S140, the control unit 50 determines whether or not the amount of coolant in the storage tank 12 is less than the predetermined amount th3 described above based on a value output from the fluid volume sensor 155 described above. Upon determining that the amount of coolant in the collection tank 12 is less than the predetermined amount th3 (YES in step S140), the control unit 50 switches control to step S142. Otherwise (NO in step S140), the control unit 50 returns to step S110.

In step S142, the control unit 50 switches the control mode of the collection pump 152 from the ON/OFF control mode to the analog control mode. For example, the control unit 50 adjusts the rotational speed of the collection pump 152 as appropriate between 20 Hz and 40 Hz. Thus, the amount of coolant in the collection tank 11 is kept at the constant amount TH described above.

Note that the control unit 50 may switch the control mode at a timing at which the amount of coolant in the storage tank 12 falls below the predetermined amount th3, or after a predetermined period (for example, 360 seconds) has elapsed from the timing.

In step S150, the control unit 50 determines whether or not the amount of coolant in the storage tank 12 is less than the predetermined amount th4 described above based on a value output from the fluid volume sensor 155 described above. Upon determining that the amount of coolant in the collection tank 12 is less than the predetermined amount th4 (YES in step S150), the control unit 50 switches control to step S152. Otherwise (NO in step S150), the control unit 50 executes the processing in step S150 again.

In step S152, the control unit 50 executes the abnormality handling processing determined in advance. Since the abnormality handling processing is as described above, the description thereof is not repeated.

### M. Summary

As described above, the control unit 50 of the machine tool 100 controls the collection pump 152 in the ON/OFF control mode when the amount of coolant in the storage tank 12 is more than or equal to the predetermined amount th3. Thereafter, the control unit 50 switches the control mode of the collection pump 152 from the ON/OFF control mode to the analog control mode in response to the amount of coolant in the storage tank 12 falling below the predetermined amount th3. With this configuration, it is possible to obtain both the benefits of the ON/OFF control mode and the benefits of the analog control mode.

More specifically, in the ON/OFF control mode, the height of the surface of coolant in the collection tank 11 fluctuates between those of the cases where the amount of coolant is the predetermined amounts th1 and th2, and foreign matter (e.g., oil and floating chips) on the surface of the coolant in the collection tank 11 is discharged to the storage tank 12 via the intake port of the collection pump 152. Also, the coolant in the collection tank 11 is dispersed as the amount of coolant in the collection tank 11 increases or decreases. Therefore, foreign matter on the surface of the coolant in the collection tank 11 is more likely to be discharged to the storage tank 12.

On the other hand, in the analog control mode, the amount of coolant in the collection tank 11 neither increases nor decreases, and accordingly, a decrease in the amount of coolant in the storage tank 12 is only due to evaporation of the coolant. Therefore, a situation is avoided in which the machine tool 100 recognizes that there is no coolant remaining in the storage tank 12 even though there is still coolant in the collection tank 11, and thus the coolant in the collection tank 11 can be fully utilized in the machine tool.

The disclosed embodiment is an illustrative example in all aspects and should not be considered as restrictive. The scope of the present invention is defined not by the above descriptions but by the claims, and is intended to encompass all modifications within the meanings and scope that are equivalent to the claims.

### List of Reference Numbers

- 11: Collection tank
- 12: Storage tank
- 13: Chip conveying device
- 20: CPU
- 21: Cover body
- 22: Horizontal section
- 23: Chip receiving section
- 24: Connection port
- 26: Standing section
- 27: Chip discharge part
- 28: Coolant discharge part
- 30: CNC unit
- 34: Endless chain
- 35: Chip conveying unit
- 37: Driving sprocket
- 38: Driven sprocket
- 39: Filtration mechanism
- 46: Filter
- 47: Internal space
- 50: Control unit
- 100: Machine tool
- 109: Ejection pump
- 110: Valve
- 111A: Motor driver
- 111R: Motor driver
- 111X: Motor driver
- 111Y: Motor driver
- 111Z: Motor driver
- 112A: Motor
- 112R: Motor
- 112X: Motor
- 112Y: Motor
- 112Z: Motor
- 113: Movable body
- 125: Ejection part
- 125A: Ejection mechanism
- 125B: Ejection mechanism
- 125C: Ejection mechanism
- 130: Cover body
- 131: Spindle head
- 132: Spindle
- 133: Housing
- 134: Tool
- 136: Table
- 140: Control panel
- 142: Display
- 150: Chip conveyor
- 151: Fluid volume sensor
- 152: Collection pump
- 153: Intake port
- 155: Fluid volume sensor
- 158: Light source
- 201: Control circuit
- 202: ROM
- 203: RAM
- 204: Communication interface
- 205: Communication interface
- 209: Internal bus
- 220: Auxiliary storage device
- 222: Control program
- 224: Settings file
- 301: Control circuit
- 302: ROM
- 303: RAM
- 305: Communication interface
- 309: Internal bus
- 320: Auxiliary storage device
- 322: Processing program

## Claims

1. A machine tool comprising:
a cover body for defining a processing area;
an ejection part for ejecting a coolant into the processing area;
a first tank for receiving the coolant ejected into the processing area;
a first detector for detecting a first coolant amount that is an amount of coolant in the first tank;
a second tank for storing the coolant to be supplied to the ejection part;
a second detector for detecting a second coolant amount that is an amount of coolant in the second tank;
a pump for feeding the coolant from the first tank to the second tank; and
a control unit that controls the machine tool,
wherein control modes of the pump include:
a first control mode in which the pump is driven when the first coolant amount is more than a first predetermined amount and the pump is stopped when the first coolant amount is less than a second predetermined amount that is smaller than the first predetermined amount; and
a second control mode in which the pump is driven in such a manner that the first coolant amount is a constant amount, and
the control unit
controls the pump in the first control mode when the second coolant amount is more than or equal to a third predetermined amount, and
switches the control mode of the pump from the first control mode to the second control mode in response to the second coolant amount falling below the third predetermined amount.

2. The machine tool according to claim 1,
wherein the control unit stops the machine tool when the second coolant amount is less than a fourth predetermined amount that is smaller than the third predetermined amount.

3. The machine tool according to claim 2,
wherein an amount obtained by subtracting the fourth predetermined amount from the third predetermined amount is larger than an amount obtained by subtracting the second predetermined amount from the first predetermined amount.

4. The machine tool according to any one of claims 1 to 3, further comprising a light source,
wherein the control unit
causes the light source to emit light in a first light emission pattern when the control mode of the pump is the first control mode, and
causes the light source to emit light in a second light emission pattern that is different from the first light emission pattern when the control mode of the pump is the second control mode.

5. The machine tool according to any one of claims 1 to 4,
wherein the pump includes an intake port for sucking the coolant,
the intake port is covered by the coolant when the amount of coolant in the first tank is the first predetermined amount, and
the intake port is not covered by the coolant when the amount of coolant in the first tank is the second predetermined amount.

6. The machine tool according to claim 5,
wherein the constant amount is smaller than the first predetermined amount and larger than the second predetermined amount, and
the intake port is covered by the coolant when the amount of coolant in the first tank is the constant amount.

7. The machine tool according to any one of claims 1 to 6,
wherein whether or not to switch the control mode of the pump from the first control mode to the second control mode is determined based on the second coolant amount detected by the second detector when the first coolant amount reaches the second predetermined amount.

8. A method for controlling a machine tool,
the machine tool including:
a cover body for defining a processing area;
an ejection part for ejecting a coolant into the processing area;
a first tank for receiving the coolant ejected into the processing area;
a first detector for detecting a first coolant amount that is an amount of coolant in the first tank;
a second tank for storing the coolant to be supplied to the ejection part;
a second detector for detecting a second coolant amount that is an amount of coolant in the second tank; and
a pump for feeding the coolant from the first tank to the second tank,
control modes of the pump including:
a first control mode in which the pump is driven when the first coolant amount is more than a first predetermined amount and the pump is stopped when the first coolant amount is less than a second predetermined amount that is smaller than the first predetermined amount; and
a second control mode in which the pump is driven in such a manner that the first coolant amount is a constant amount, and
the method comprising:
a step of controlling the pump in the first control mode when the second coolant amount is more than or equal to a third predetermined amount; and
a step of switching the control mode of the pump from the first control mode to the second control mode in response to the second coolant amount falling below the third predetermined amount.

9. A program for controlling a machine tool,
the machine tool including:
a cover body for defining a processing area;
an ejection part for ejecting a coolant into the processing area;
a first tank for receiving the coolant ejected into the processing area;
a first detector for detecting a first coolant amount that is an amount of coolant in the first tank;
a second tank for storing the coolant to be supplied to the ejection part;
a second detector for detecting a second coolant amount that is an amount of coolant in the second tank; and
a pump for feeding the coolant from the first tank to the second tank,
control modes of the pump including:
a first control mode in which the pump is driven when the first coolant amount is more than a first predetermined amount and the pump is stopped when the first coolant amount is less than a second predetermined amount that is smaller than the first predetermined amount; and
a second control mode in which the pump is driven in such a manner that the first coolant amount is a constant amount, and
the program causes the machine tool to execute:
a step of controlling the pump in the first control mode when the second coolant amount is more than or equal to a third predetermined amount; and
a step of switching the control mode of the pump from the first control mode to the second control mode in response to the second coolant amount falling below the third predetermined amount.
